Europäisches Patentamt

(19) European Patent Office

Office européen des brevets

(11) Publication number: **0 050 599**

**B1**

(12) **EUROPEAN PATENT SPECIFICATION**

(45) Date of publication of patent specification: **17.04.85**

(21) Application number: **81850172.8**

(22) Date of filing: **30.09.81**

(51) Int. Cl.⁴: **D 21 H 3/48,** D 21 H 5/00, C 08 J 3/20

(54) **Impregnated paper and its use.**

(30) Priority: **17.10.80 SE 8007298**

(43) Date of publication of application:
**28.04.82 Bulletin 82/17**

(45) Publication of the grant of the patent:
**17.04.85 Bulletin 85/16**

(84) Designated Contracting States:
**DE FR GB NL**

(56) References cited:
**DE-B-1 068 105**
**GB-A- 625 323**
**GB-A- 683 956**
**GB-A- 857 491**
**US-A-1 925 584**
**US-A-2 943 013**
**US-A-2 943 970**
**US-A-3 716 395**

**CHEMICAL ABSTRACTS, vol. 83, no. 18,
November 03, 1975, page 133, abstract no.
149425p, COLUMBUS, Ohio (US)**

(73) Proprietor: **AB CASCO
Box 11010
S-100 61 Stockholm (SE)**

(72) Inventor: **Inge, Mats
Gamla Värmdövägen 2 IX
S-131 36 Nacka (SE)**

(74) Representative: **Schöld, Zaid
c/o KemaNobel AB Patents Box 11065
S-100 61 Stockholm (SE)**

Courier Press, Leamington Spa, England.

## Description

The present invention relates to an impregnated paper of the kind which comprises a paper web impregnated with a pre-condensate of a curable resin containing a filler.

### Background of the Invention

Impregnated paper is usually produced by passing a paper web through a solution or a dispersion of a pre-condensate of a curable resin and the impregnated paper is then dried. The obtained product is a semi-finished product to the extent that the residual adhesiveness of the resin can later be used to fix the paper to a substrate, generally a sheet material of wood or cellulose-based composite materials. The paper is hereby used to improve the surface of the sheet material, either with respect to its appearance or its chemical or mechanical resistance. There has been a need to improve the properties of the impregnated paper above what is obtained by the resin only, particularly as far as the mechanical wear resistance is concerned. Attempts with addition of wear-resistant fillers have not been successful. For example, the fillers tend to settle in the impregnating solutions, which have a very low viscosity, with the result that the composition of the solutions will not be stable or the filler coating on the surface of the paper will not be uniform. Further, to improve the wear strength the filler must be very securely anchored in the resin layer and this has been difficult to achieve, partly because of a limited chemical bonding capability between resin and filler and partly because of the limited contact surface between these. The filler particle have consequently very easily come loose and not improved the abrasion strength to any considerable extent. Finally, as the resin layer on the impregnated papers is very thin there are especially high demands on the size distribution of the used fillers and on a very uniform mixing of the particles in the resin. It has been found that many fillers, for the above given reasons, cannot be used for impregnated papers, although the same fillers are quite satisfactory for other purposes, e.g. in moulding compositions or generally for products based on thermoplastics.

### The Invention Generally

The object of the present invention is to provide an impregnated paper containing a filler, which paper does not have the above mentioned disadvantages. Particularly, the object of the invention is to provide an impregnated paper having improved wear resistance by selection of a filler which is securely anchored in the resin and which easily can be mixed into and distributed in this. A further object of the invention is to provide a particularly suitable method of production and a particularly suitable use of the impregnated paper of the invention.

The above objects are achieved by means of the characteristic features given in the appended claims.

According to the invention inorganic fillers of calcium silicate hydrate are used, which fillers have a considerable porosity, stated as a high specific surface in the claims. A high porosity is preferable for several reasons. A limited penetration of the resin into the particles gives a larger contact-surface between the resin and particle and an improved mechanical retention and the particles are thus more efficiently retained in the resin layer. The presence of resin in the particles reinforces these and decreases the problems of brittleness of the particles and this improves the general wear strength. As it is possible to make porous particles containing air-inclusions in the resin solution problems of sedimentation are avoided to a considerable extent and the light refraction and the brightness of the finished product are improved. Silicate materials generally have good adhesiveness towards the used resins and it has been found that particularly calcium silicate hydrates have good bonding properties to formaldehyde-based curable resins and that they are capable of influencing the reaction rate positively, near the surface of the particle.

Further objects and advantages of the invention will be evident from the detailed description below.

### Detailed Description of the Invention

Suitable resins for impregnation of paper according to the invention are formaldehyde-based curable resins, such as phenolic resins, melamine resins or urea resins. Phenolic resins have been found particularly suitable for the uses of the invention. The paper that is used can have a weight of between 10 and 150 $g/m^2$ and preferably between 20 and 80 $g/m^2$. A suitable weight after impregnation and drying is between 30 and 400 $g/m^2$ and preferably between 60 and 240 $g/m^2$. As a rule it is possible to use a lighter paper when it contains fillers according to the invention, than normally used for the corresponding purposes.

The filler of the invention should have such a particle size distribution that the majority of the particles have a size of from 1 to 100 μm, and preferably from 10 to 50 μm. By the majority of the particles should be understood at least 50 per cent and preferably at least 68 per cent of the number of particles. Particles having a size below 1 μm do not contribute to an improved wear strength to any extent worth mentioning and particles having a size above 100 μm tend to give the finished product an uneven surface.

As has been mentioned the filler particles which are used should be porous and they can have a porosity, expressed as the ratio of bulk density to true density, of between 0.01 and 0.6 and particularly between 0.05 and 0.4. The specific surface should be high in order that the desired limited penetration of the resin into the pores will be obtained. The surface (BET) is suitably between 5 and 150 $m^2/g$ and preferably between 15 and 100 $m^2/g$. The true density should be kept below 3.5, as there might otherwise be sedimentation problems at the impregnation. It is preferred that the filler has alcaline reaction as this facilitates the curing of the resin, at and in the particles. ·

Calcium silicate hydrates as fillers have good abrasion resistance and adhesion to the resins that are used. They are also preferred because of their hardness, acalinity and the possibility of a large specific surface. Suitable calcium silicate hydrates should have a mole ratio $SiO_2$ to CaO above 0.7. The mole ratio should not exceed 3.2 and is preferably within the range 1.0 to 3.0. The content of water of crystallization should not exceed 30 per cent by weight and preferably not exceed 20 per cent by weight. A suitable calcium silicate hydrate can be prepared by mixing a silicon dioxide raw material and a calcium oxide raw material to a mole ratio as above and suspending the finely divided components in water. The suspension is then autoclaved for a couple of hours at a temperature of from about 200 to about 400°C and the product is subsequently dehydrated by heat treating at a temperature above about 800°C. The obtained product has a large specific surface and can be used as a filler directly. A pigment can optionally be incorporated immediately before use, or at the production so that it will be built into the crystalline structure. Treatment with coloring agent is another method of obtaining a colored filler.

The described filler can be added to the impregnated paper either by addition to the stock at the production of the paper web or by addition to the impregnating resin. The latter method is preferred with respect to wear resistance..

The amount of filler should be between 2 and 40 per cent by weight, based on the amount of dry resin in the paper, and preferably between 10 and 30 per cent by weight based on the dry resin content.

When a suitable impregnating solution is prepared the filler can be mixed directly into a prepared solution or dispersion of the pre-condensate. Slow addition and vigorous stirring are required as the porous filler otherwise easily forms lumps and precipitates. It is thus preferred that the filler is slurried in a liquid, separate from the resin solution, and that the slurry is then mixed with the resin solution. If pure water is used for preparing the slurry problems of resin precipitation in the pores of the filler will readily arise as the resin generally has limited water dilutability. It is thus preferred that the slurry medium at least partly consists of volatile alcohols, such as methanol and ethanol. When the slurry medium, the composition of the resin solution and the mixing conditions are selected care should be taken that only a limited penetration of the liquid phase into the pore structure of the filler particles will take place as remaining gas inclusions, among other things, positively contributes to diminishing settling problems, according to what has been said above. When the impregnating solution has been prepared, the impregnation can be carried out in a known manner. The paper web is passed through the impregnating solution, optionally also passed through a couple of squeeze rolls to remove excess solution, and passed through a drying tunnel where it gets in contact with hot air having a temperature of about 100 to 170°C. ·

The obtained impregnated paper is a semi-finished product which can be used in the customary manner, e.g. for coating sheet materials of wood or cellulose-based composite materials such as particle board, plywood or fibre board. The paper is then pressed onto the sheet-formed substrate in a press at a temperature of about 110 to 150°C and the resin then softens, moistens the substrate and is bonded to this when the resin is finally cured. The impregnated paper of the invention is particularly suitable for use when a high abrasion resistance is required, for example for use on floors, lorry platforms and moulds for concrete.

### Example

A powder of calcium silicate hydrate having a particle diameter of between 1 μm and 100 μm and a specific surface of 40 $m^2$/g was slurried in a liquid phase, consisting of equal parts of water and ethanol, to a solids content of the slurry of 50 per cent by weight. About 20 parts by weight of the slurry were mixed with about 80 parts by weight of an aqueous solution of a phenol-formaldehyde pre-condensate having a dry content of 50 per cent by weight. A paper web having a basis weight of 25 g/$m^2$ was passed through the obtained impregnating solution, passed through stripper rolls, and thereafter through a drying zone in contact with air having a temperature of 130°C. The dried web had a basis weight of 120 g/$m^2$. This paper was pressed onto a plywood sheet at a pressure of about 2 MPa and a temperature of about 130°C. The coated sheet was subjected to abrasion tests and was found to have about three times as high abrasion resistance as a corresponding sheet with a phenolic resin layer which did not contain a filler.

### Claims

1. Impregnated paper comprising a paper web, a pre-condensate of a curable formaldehyde-based resin and a filler, characterized in, that as filler is used a calcium silicate hydrate, which has a specific surface between 5 and 150 $m^2$/g and particle sizes between 1 and 100 μm.

2. Impregnated paper according to claim 1, characterized in that the mole ratio of $SiO_2$ to CaO in the calcium silicate hydrate is between 0.7 and 3.2.

3. Impregnated paper according to claim 2, characterized in that the mole ratio is between 1.0 and 3.0.

4. Impregnated paper according to claim 1, characterized in that the specific surface is between 15 and 100 $m^2$/g.

5. Impregnated paper according to claim 1, characterized in that the curable resin in the precondensate is a phenolic resin.

6. Impregnated paper according to claim 1, characterized in that the amount of calcium silicate hydrate is from 10 to 30 per cent by weight of the amount of dry resin in the paper.

7. Use of an impregnated paper comprising a pre-condensate of a curable formaldehyde-based resin and a filler of calcium silicate hydrate with a specific surface between 5 and 150 m²/g, and having particle sizes between 1 and 100 µm, as an abrasion resistant coating material on wood or on cellulose-based materials.

## Revendications

1. Papier imprégné comprenant un ruban de papier, un précondensat d'une résine durcissable à base de formaldéhyde et une charge, caractérisé en ce qu'on utilise, en tant que charge, un hydrate-silicate de calcium qui présente une surface spécifique comprise entre 5 et 150 m²/g et une granulométrie comprise entre 1 et 100 µm.

2. Papier imprégné selon la revendication 1, caractérisé en ce que le rapport moléculaire de $SiO_2$ à CaO, dans l'hydrate-silicate de calcium, est compris entre 0,7 et 3,2.

3. Papier imprégné selon la revendication 2, caractérisé en ce que le rapport moléculaire est compris entre 1,0 et 3,0.

4. Papier imprégné selon la revendication 1, caractérisé en ce que la surface spécifique est comprise entre 15 et 100 m²/g.

5. Papier imprégné selon la revendication 1, caractérisé en ce que la résine durcissable du précondensat est une résine phénolique.

6. Papier imprégné selon la revendication 1, caractérisé en ce que la quantité d'hydrate-silicate de calcium est de 10 à 30 % en poids de la quantité de résine sèche contenue dans le papier.

7. Utilisation, en tant que matériau de revêtement du bois ou de matière à base de cellulose, d'un papier imprégné comprenant un précondensat d'une résine durcissable à base de formaldèhyde et une charge d'hydrate-silicate de calcium avec une surface spécifique comprise entre 5 et 150 m²/g, et présentant une granulométrie comprise entre 1 et 100 µm.

## Patentansprüche

1. Imprägniertes Papier, welches eine Papierbahn, ein Vorkondensat aus einem härtbaren Harz auf Formaldehydbasis und einen Füllstoff umfaßt, dadurch gekennzeichnet, daß als Füllstoff ein Kalziumsilikathydrat verwandt ist, das eine spezifische Oberfläche zwischen 5 und 150 m²/g und Teilchengrößen zwischen 1 und 100 µm hat.

2. Imprägniertes Papier nach Anspruch 1, dadurch gekennzeichnet, daß das Molverhältnis von $SiO_2$ zu CaO im Kalziumsilikathydrat zwischen 0,7 und 3,2 liegt.

3. Imprägniertes Papier nach Anspruch 2, dadurch gekennzeichnet, daß das Molverhältnis zwischen 1,0 und 3,0 liegt.

4. Imprägniertes Papier nach Anspruch 1, dadurch gekennzeichnet, daß die spezifische Oberfläche zwischen 15 und 100 m²/g beträgt.

5. Imprägniertes Papier nach Anspruch 1, dadurch gekennzeichnet, daß das härtbare Harz im Vorkondensat ein Phenolharz ist.

6. Imprägniertes Papier nach Anspruch 1, dadurch gekennzeichnet, daß die Menge an Kalziumsilikathydrat 10 bis 30 Gew% der Menge an trockenem Harz im Papier ausmacht.

7. Verwendung eines imprägnierten Papiers, welches ein Vorkondensat aus einem härtbaren Harz auf Formaldehydbasis und einen Füllstoff aus Kalziumsilikathydrat mit einer spezifischen Oberflächezwischen 5 und 150 m²/g und Teilchengrößen zwischen 1 und 100 µm umfaßt, als abriebfestes Überzugsmaterial auf Holz oder auf Materiallen auf Zellulosebasis.